# EUROPEAN PATENT SPECIFICATION

(11) **EP 1 972 534 B1**
(45) Date of publication and mention of the grant of the patent: **16.05.2012**
(21) Application number: 08251008.2
(22) Date of filing: 20.03.2008
(51) Int. Cl.: B62K 11/10, B62K 19/46, B62K 25/28, F02M 35/16, F02M 35/10

(54) **Motorcycle**
Motorrad
Motocyclette

(30) Priority: 23.03.2007 JP 2007076012
(43) Date of publication of application: 24.09.2008
(73) Proprietor: Yamaha Hatsudoki Kabushiki Kaisha, Iwata-shi, Shizuoka 438-8501 (JP)
(72) Inventor: Masaru, Ohira, Shizuoka-ken 438-8501 (JP)
(74) Representative: Grünecker, Kinkeldey, Stockmair & Schwanhäusser

(56) References cited:
- EP-A- 0 581 310
- EP-A- 1 510 450
- WO-A-2004/071858
- JP-A- 8 175 452
- JP-A- 11 321 746

## Description

### BACKGROUND

The present invention relates to a motorcycle having a unit swing type engine supported by a body frame such that the engine can swing upward and downward.

A typical example of scooter type motorcycle supports a unit swing type engine unit by a body frame having a low footrest such that the engine unit can swing upward and downward, and mounts a straddle-type seat on the body frame above the engine unit.

For example, Japanese Patent No. 3,765,966 proposes a structure of this type of motorcycle which supports the upper part of the engine unit by the body frame via a suspension member such that the engine unit can swing, and disposes an intake system including a throttle body and an air cleaner above the engine unit, and a fuel injection valve at a position downstream from the throttle body of the intake system. According to Japanese Patent No. 3,765,966, a storage box capable of accommodating a helmet or the like is provided on the body frame above the engine unit, and an opening of the storage box is opened and closed by the seat.

In this the known motorcycle, the upper part of the engine unit is supported by the body frame via the suspension member such that the engine unit can swing. The throttle body and the fuel injection valve are disposed above the engine unit, and the storage box is further provided above the engine unit. In this structure, there is a possibility that the throttle body and the fuel injection valve interfere with the body frame, the suspension member, and the storage box depending on the positions of the throttle body and the fuel injection valve.

This possibility can be eliminated when the bottom of the storage box is located at a higher position, for example. In this case, however, the storage capacity becomes smaller. Alternatively, such an arrangement of the throttle body positioned behind and away from the suspension member and the fuel injection valve positioned before the suspension member is possible. In this case, however, the intake path becomes longer.

JP 08-175452, EP 0 581 310 A and JP 11-321746 each disclose scooter-type motorcycles. JP 08-175452 relates to an air cleaner which is arranged in the scooter-type motorcycle such that the arrangement can be made more compact. EP 0 581 310 A relates to a luggage box for storage of a crash helmet in a motorcycle. JP 11-321746 relates to an arrangement which can increase the size of a housing box in the motorcycle.

JP 08-175452 discloses the features of the pre-characterizing portion of Claim 1.

The invention seeks to provide a motorcycle capable of disposing an intake system including a throttle body so as to maintain a good storage capacity of a storage unit.

### SUMMARY

In accordance with the present invention there is provided a motorcycle as set out in claim 1.

Here the reference to "a third frame member which has a portion passing the other side of the vehicle in the vehicle width direction and extending higher than the first frame member" can include a third frame member not the entire length of which passes the other side in the vehicle width direction and extends higher than the first frame member, but only a part of which passes the other side in the vehicle width direction and extends higher than the first frame member. The difference between the heights of the first frame member and third frame member can be calculated by comparison between the first and third frame members on a cross section orthogonal to the center line in the vehicle front-rear direction.

The throttle body is disposed at a position shifted toward the third frame member and at a position lower than the portion of the third frame member extending higher than the first frame member. Thus, a space produced below the third frame member can be effectively utilized as a space for disposing the throttle body.

The storage unit and the throttle body are disposed in parallel with each other in the vehicle width direction. Thus, a space produced on the side of the storage unit can be effectively utilized as a space for disposing the throttle body.

### BRIEF DESCRIPTION OF THE DRAWINGS

An embodiment of the invention is hereinafter described, by way of example only, with reference to the accompanying drawings.
Fig. 1 is a side view illustrating a motorcycle according to an embodiment of the invention.
Fig. 2 is a side view illustrating a body frame, an engine unit, a storage unit, and a fuel tank included in the motorcycle.
Fig. 3 is a side view illustrating the body frame and the engine unit included in the motorcycle.
Fig. 4 is a perspective view of the engine unit mounted on the body frame.
Fig. 5 is a cross-sectional back view illustrating a throttle body area of the engine unit (cross-sectional view taken along a line V-V in Fig. 2)
Fig. 6 is a plan view of the body frame.
Fig. 7 is a perspective view of a disassembled suspension area of the engine unit.
Fig. 8 is a side view of the suspension area.
Fig. 9 is a cross-sectional view of the suspension area (cross-sectional view taken along a line IX-IX in Fig. 8).

### DETAILED DESCRIPTION

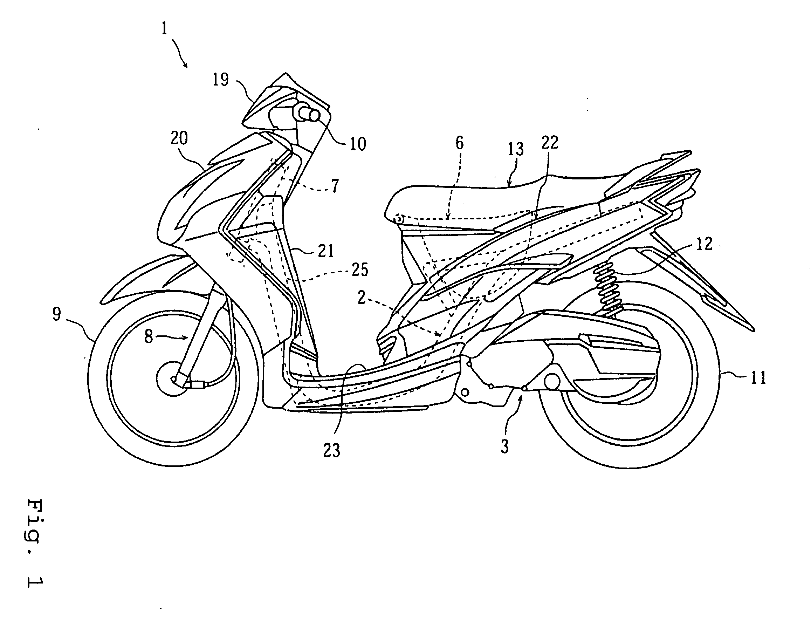

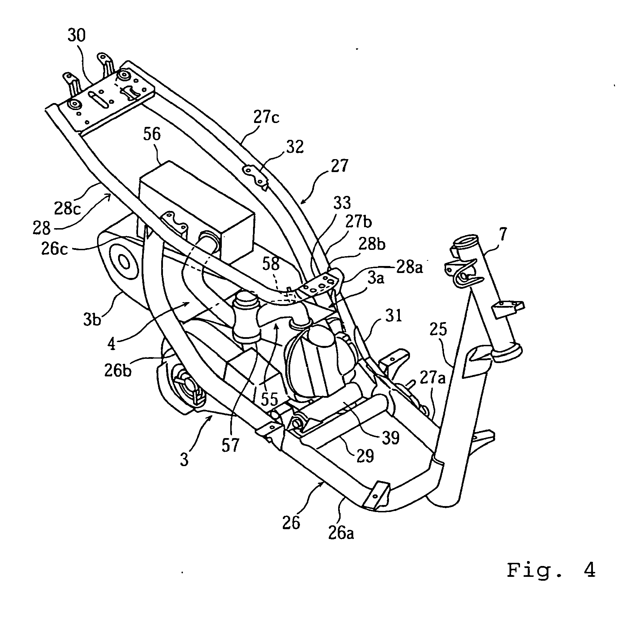

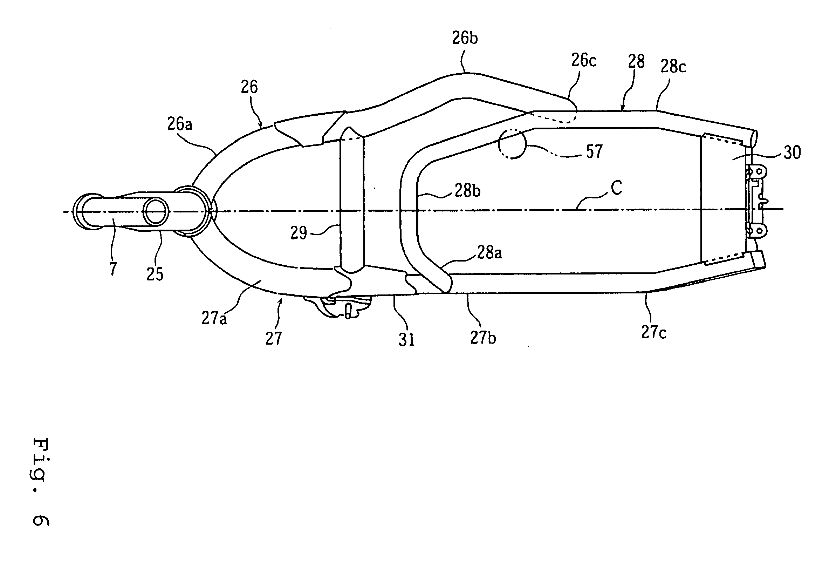

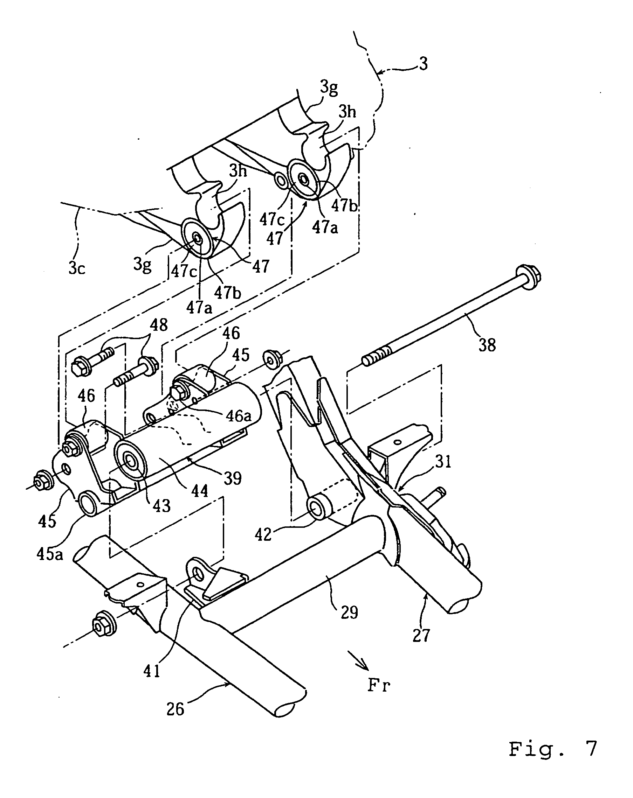

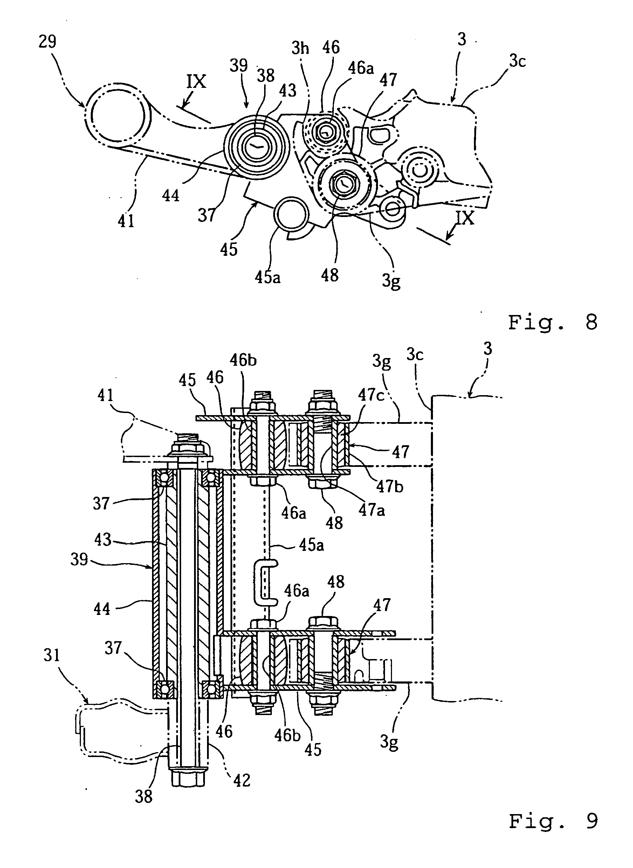

Figs. 1 to 9 illustrate an example of a motorcycle according to an embodiment of the invention. In the description of this embodiment, the front-rear direction and the left-right direction correspond to the front-rear direction and the left-right direction as viewed from a person sitting on a seat.

In the figures, an example of a scooter-type motorcycle 1 is shown. The motorcycle 1 includes an under-bone-type body frame 2, a unit swing type engine unit 3 supported by the body frame 2 such that the engine unit 3 can freely swing upward and downward, intake system 4 and exhaust system 5 connected with the engine unit 3, and a storage unit 6 provided on the body frame 2 above the engine unit 3.

The motorcycle 1 further includes a front fork 8 supported by a head pipe 7 disposed at the front end of the body frame 2 such that the front fork 8 can be freely turned to the left and right, a front wheel 9 supported by the lower end of the front fork 8, a steering handle 10 fixed to the upper end of the front fork 8, a rear wheel 11 supported by the rear end of the engine unit 3, and a straddle-type seat 13 for two persons mounted on the body frame 2 above the storage unit 6. Only one rear cushion (shock absorber) 12 is provided between the body frame 2 and the engine unit 3, and a fuel tank 14 is disposed on the body frame 2 behind the storage unit 6.

The motorcycle 1 further includes a handle cover 19 surrounding the outer periphery of the steering handle 10, a front cover 20 provided on the body frame 2 and covering the front portion of the head pipe 7, a leg shield 21 disposed behind the head pipe 7 and covering a space before the legs of the rider, a side cover 22 covering the lower periphery of the seat 13, and a low footboard 23 disposed between the leg shield 21 and the side cover 22.

The body frame 2 has the head pipe 7, a single main pipe 25 which has a circular horizontal cross section and extends diagonally downward to the rear from the head pipe 7, asymmetric left side pipe (first frame member) 27 and right side pipe 26 extending from the lower end of the main pipe 25 toward the rear of the vehicle while expanding to the left and right, and a seat pipe (third frame member) 28 connecting the left side pipe 27 and the right side pipe 26.

The body frame 2 further has a cross pipe 29 which has a circular horizontal cross section and connects the left and right side pipes 27 and 26 in the vehicle width direction at the intermediate positions of these side pipes in the front-rear direction, and a cross member 30 made of sheet metal and connecting the rear ends of the left side pipe 27 and the seat pipe 28 in the vehicle width direction.

The right side pipe 26 has a right footrest 26a extending from the lower end of the main pipe 25 toward the rear substantially in the horizontal direction, an inclined portion 26b extending diagonally upward from the rear end of the right footrest 26a and bended in a convex V shape toward the outside in the vehicle width direction as viewed from above the vehicle, and a vertical portion 26c extending upward from the rear end of the inclined portion 26b. The right side pipe 26 has a circular horizontal cross section and the same diameter throughout its length.

The left side pipe 27 has a left footrest 27a extending from the lower end of the main pipe 25 in the direction parallel with the right footrest 26a, a rising portion 27b extending diagonally upward from the rear end of the left footrest 27a, and a seat rail portion 27c extending diagonally upward at an inclination angle smaller than that of the rising portion 27b from the rear end of the rising portion 27b.

The left footrest 27a of the left side pipe 27 has a circular horizontal cross section, and the rising portion 27b and the seat rail portion 27c have oblong rectangular horizontal cross sections. The left footrest 27a and the rising portion 27b are combined into one body by welding via a connection member 31 made of sheet metal.

The seat pipe 28 has a rising portion 28a extending diagonally upward to the front from the intermediate portion of the rising portion 27b of the left side pipe 27 in the up-down direction, a cross portion 28b extending from the upper end of the rising portion 28a curvedly to the right in the vehicle width direction, and a seat rail portion 28c extending diagonally upward from the right end of the cross portion 28b curvedly toward the rear. The upper edges of the seat rail portion 28c of the seat pipe 28 and the seat rail portion 27c of the left side pipe 27 agree with each other as viewed from the side of the vehicle, and overlap with each other in the vehicle width direction. The seat pipe 28 has a circular horizontal cross section throughout its length, and the pipe diameter of the seat pipe 28 is smaller than the pipe diameter of the right side pipe 26.

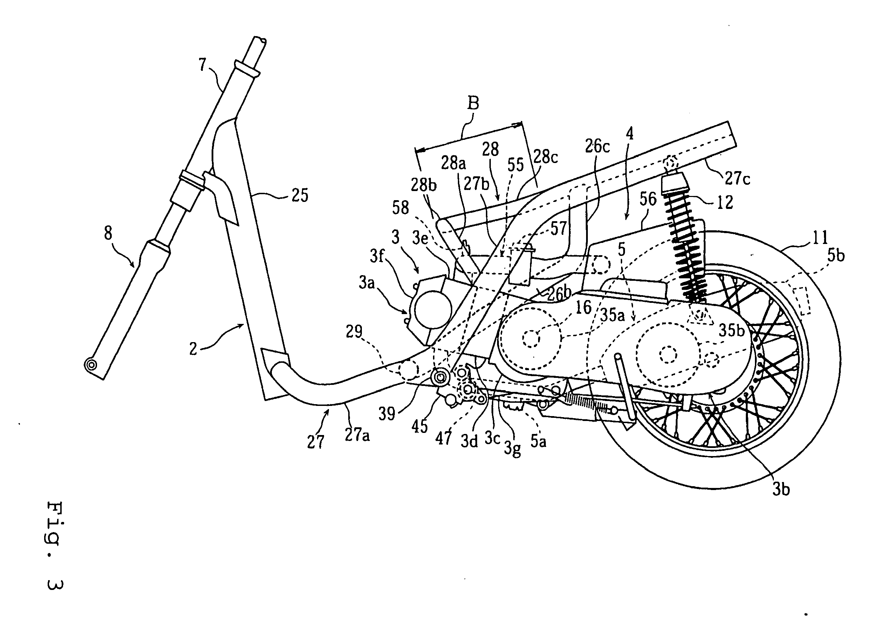

The left side pipe 27 corresponds to a first frame member disposed in such a position as to pass the left side (one side) in the vehicle width direction. The seat pipe 28 corresponds to a third frame member disposed in such a position as to pass the right side (the other side) in the vehicle width direction. A region B of the seat pipe 28 shown in Fig. 3 corresponds to a portion of the third frame member passing the other side and higher than the first frame member.

A portion of the seat rail 28c of the seat pipe 28 behind the region B is located at the same level as that of the seat rail portion 27c of the left side pipe 27 and extends substantially in parallel with the seat rail portion 27c. The upper end surface of the vertical portion 26c of the right side pipe 26 is combined with the approximately middle portion of the seat rail portion 28c of the seat pipe 28 in the front-rear direction into one body by welding.

The inclination angle of the inclined portion 26b is smaller than the rising angle of the rising portion 27b as viewed from the side of the vehicle. The vertical portion 26c is disposed behind the rising portion 27b, and the rising portion 28a is positioned before the rising portion 27b.

The cross pipe 29 is disposed behind the left and right footrests 27a and 26a, and the footboard 23 is provided on the left and right footrests 27a and 26a.

The storage unit 6 has a capacity sufficient for accommodating a helmet or the like. The storage unit 6 is disposed within a space surrounded by the left and right side pipes 27 and 26, and the rising portion 28a and the cross portion 28b of the seat pipe 28, and attached to components such as brackets 32 and 33 fixed to the seat rail portion 27c and the cross portion 28b.

The storage unit 6 has an opening 6a open to above. The opening 6a is located at a position higher than the seat rail portions 27c and 28c of the left side pipe 27 and the seat pipe 28.

A hinge 6e projects toward the front from the front edge of the storage unit 6. The front end of the seat 13 is supported by the hinge 6e via a hinge pin 6f. The opening 6a of the storage unit 6 and a feed oil port 14a of the fuel tank 14 are exposed when the seat 13 is rotated upward around the hinge pin 6f. The feed oil port 14a may be disposed behind the seat 13.

A flange 6b is provided on the peripheral edge of the opening 6a of the storage unit 6, and a seal member 34 attached to a bottom plate 13a of the seat 13 contacts the flange 6b.

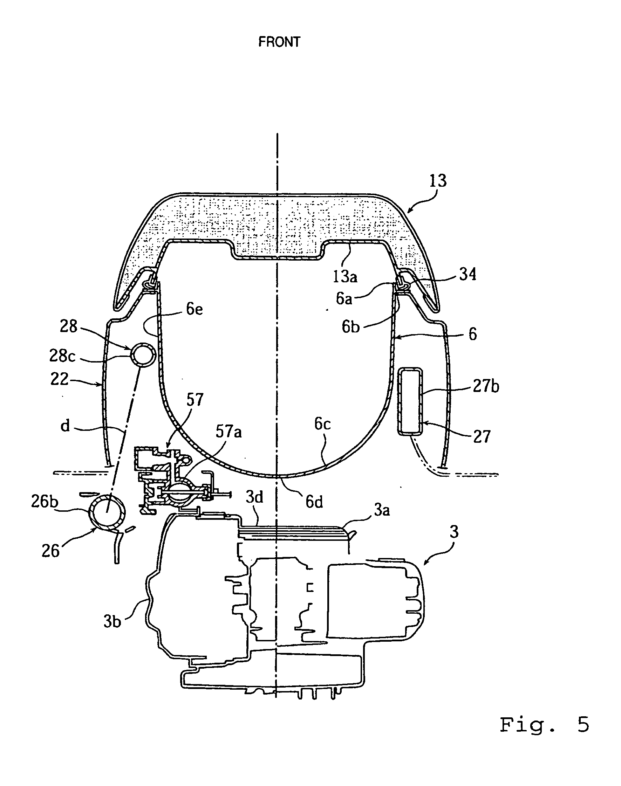

The bottom 6c of the storage unit 6 expands downward in a convex shape. A lowermost end 6d located at the lowest position of the storage unit 6 is disposed at a position lower than the positions of the rising portion 27b of the left side pipe 27 and the cross portion 28b and the seat rail portion 28c of the seat pipe 28 and at a position slightly higher than the inclined portion 26b of the right side pipe 26 as viewed in the cross section in Fig. 5 passing the lowermost end 6d and orthogonal to a center line C in the front-rear direction of the vehicle.

The engine unit 3 has an engine main body 3a disposed such that a cylinder axis A extends substantially in the horizontal direction, and a transmission case 3b formed integrally with the left wall of the engine main body 3a and extending toward the rear.

The engine main body 3a is a four-stroke single cylinder type engine, and has a cylinder block 3d, a cylinder head 3e, and a head cover 3f sequentially connected with the front wall of a crank case 3c accommodating a crank shaft 16.

The transmission case 3b accommodates a belt-type continuously variable transmission mechanism 35. The continuously variable transmission mechanism 35 has a driving pulley 35a disposed at the left end of the crank shaft 16, and a driven pulley 35b disposed at the rear end of the transmission case 3b and connected with the driving pulley 35a by a V belt 35c. The engine rotation is transmitted to the rear wheel 11 via the continuously variable transmission mechanism 35.

The lower portion of the crank case 3 of the engine unit 3 is supported by the body frame 2 such that the body frame 2 can swing. In this example, the engine unit 3 has the following structure.

A pivot bracket 41 is fixed to the right end of the cross pipe 29 in such a condition as to project toward the rear. A pivot boss 42 is fixed to the connection member 31 of the left side pipe 27 in such a condition as to project toward the inside in the vehicle width direction.

A pivot member 39 is provided between the pivot bracket 41 and the pivot boss 42, and supported by a pivot bolt 38. The pivot member 39 has an inner race 43 sandwiched between the pivot bracket 41 and the pivot boss 42 and fixed thereto by the pivot bolt 38, and an outer race 44 rotatably supported by the inner race 43 via left and right bearings 37, 37.

Left and right link brackets 45, 45 which are substantially U-shaped and open to above are fixed to both ends of the outer race 44 in the axial direction in such a condition as to project toward the rear. The left and right link brackets 45 are connected with each other by a connection pipe 45a such that the link brackets 45 can rotate as one body.

Rubber elastic members 46, 46 are fixed to the upper portions of the left and right link brackets 45 by bolts 46a, 46a via collars 46b, 46b.

A pair of left and right suspension portions 3g, 3g project toward the front from the lower wall of the crank case 3c of the engine unit 3. Left and right rubber bushings 47, 47 are attached to the front portions of the left and right suspension portions 3g, 3g. Each of the left and right rubber bushings 47 has an inner cylinder 47a and an outer cylinder 47b fixed by a rubber member 47c inserted therebetween. The outer cylinder 47b is fixed to the suspension portion 3g by press fit in such a condition that the axis of the outer cylinder 47b extends in the vehicle width direction. The inner cylinder 47a of each of the left and right rubber bushings 47 is fixed to the lower portion of the elastic member 46 of the link bracket 45 by bolts 48, 48.

Engaging concave structures (concaves) 3h, 3h which are circular-arc-shaped and open approximately upward are formed on the upper portions of the rubber bushings 47 provided on the left and right suspension portions 3g. The elastic members 46 engage with the left and right engaging concaves 3h.

The exhaust system 5 has an exhaust pipe 5a connected in such a condition as to communicate with an exhaust port formed on the lower wall surface of the cylinder head 3e, and a muffler 5b connected with the downstream end of the exhaust pipe 5a. The exhaust pipe 5a is guided from the lower wall surface of the cylinder head 3e to the right in the vehicle width direction, and extends toward the rear on the right side of the vehicle to be connected with the muffler 5b disposed on the right side of the rear wheel 11.

The intake system 4 has an intake pipe 55 connected in such a condition as to communicate with an intake port formed on the upper wall surface of the cylinder head 3e, an air cleaner 56 connected with the upstream end of the intake pipe 55, and a throttle body 57 provided at an intermediate position of the intake pipe 55. The throttle body 57 contains a throttle valve 57a for controlling the passage area of the intake passage.

A fuel injection valve 58 is provided at a position of the intake pipe 55 downstream from the throttle body 57. The fuel injection valve 58 supplies fuel by injection through the intake port toward the back surface of the intake valve.

The intake pipe 55 is guided from the upper wall surface of the cylinder head 3e to the right in the vehicle width direction, and extends from the right side toward the left side to be connected with the air cleaner 56 fixed to the upper surface of the transmission case 3b.

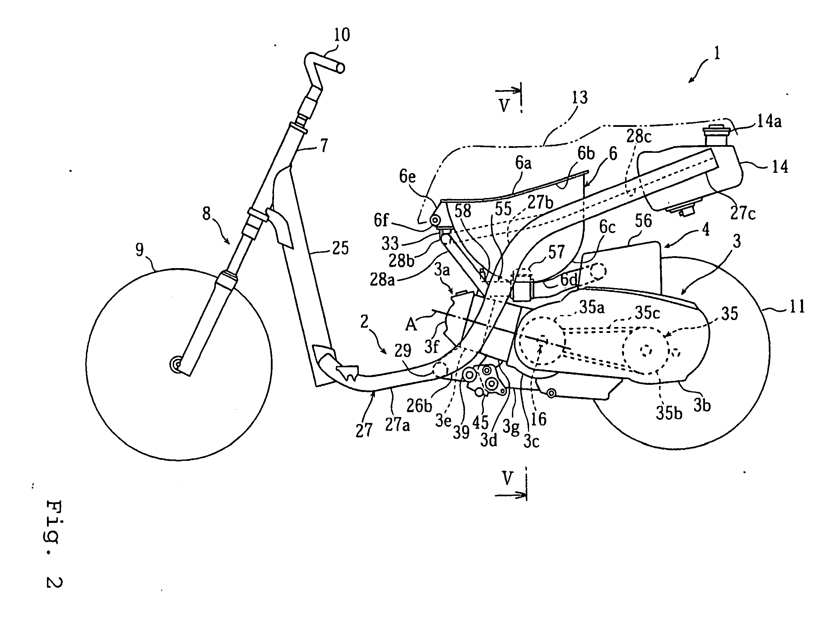

The throttle body 57 is disposed at a position shifted toward the seat rail portion 28c of the seat pipe 28 from the vehicle center line C and lower than the position of the seat rail portion 28c. The throttle body 57 is disposed in the vicinity of the inside of the inclined portion 26b of the right side pipe 26, and close to the upper surface of the cylinder block 3d (see Figs. 2, 3 and 5).

A part of the throttle body 57 overlaps with the seat rail portion 28c of the seat pipe 28 as viewed from above the vehicle (see Fig. 5). A part of the throttle body 57 projects from the right wall surface 6e of the storage unit 6 toward the outside in the vehicle width direction, and is disposed in the vicinity of the inside of a straight line d connecting the seat rail portion 28c of the seat pipe 28 and the inclined portion 26b of the right side pipe 26 as viewed from above the vehicle.

The throttle body 57 is disposed in parallel with the storage unit 6 in the vehicle width direction. The upper portion of the throttle body 57 overlaps with the bottom 6c of the storage unit 6 as viewed from the side of the vehicle.

Thus, the throttle body 57 is positioned within a space surrounded by the seat pipe 28, the right side pipe 26, the storage unit 6, and the engine unit 3 as viewed from the front of the vehicle, and also positioned at the portion between the rising portion 27b of the left side pipe 27 and the inclined portion 26b of the right side pipe 26 as viewed from the side of the vehicle.

In this embodiment, the throttle body 57 is disposed at the position shifted toward the seat rail portion 28c of the seat pipe 28 extending higher than the position of the rising portion 27b of the left side pipe 27, and also disposed at the position lower than the seat rail portion 28c. Thus, the space below the seat pipe 28 positioned higher than the left side pipe 27 can be effectively utilized as a space for disposing the throttle body 57.

Since a part of the throttle body 57 overlaps with a part of the seat rail portion 28c as viewed from above the vehicle, the throttle body 57 can be provided without increasing the size of the body frame 2 in the vehicle width direction.

In this embodiment, the storage unit 6 is disposed between the left side pipe 27 and the seat pipe 28, and the bottom 6d of the storage unit 6 is located at a position lower than the seat pipe 28. Thus, the capacity of the storage unit 6 can be increased without interference between the storage unit 6 and the seat pipe 28.

Since the bottom 6d of the storage unit 6 is disposed at a position lower than the left side pipe 27, the capacity of the storage unit 6 can be further increased.

In this embodiment, the engine unit 3 is disposed such that its cylinder axis A extends substantially in the horizontal direction, and-the intake system 4 is connected with the upper surface of the engine unit 3. Thus, the space for disposing the intake system 4 can be securely produced while a sufficient volume of the storage unit 6 can be provided.

In this embodiment, the throttle body 57 and the storage unit 6 are disposed such that the upper portion of the throttle body 57 and the bottom 6c of the storage unit 6 overlap with each other as viewed from the side of the vehicle and extend in parallel with each other in the vehicle width direction. Thus, the space on the right side of the storage unit 6 can be effectively utilized as a space for disposing the throttle body 57.

Since the throttle body 57 is disposed at a position shifted to the right in the vehicle width direction from the body center line C, interference between the throttle body 57 and the storage unit 6 can be prevented.

In this embodiment, a part of the throttle body 57 overlaps with a part of the storage unit 6 as viewed from above the vehicle. Thus, the throttle body 57 does not project to the outside in the vehicle width direction, and the space for providing the throttle body 57 can be secured without increasing the size of the body frame 2 in the vehicle width direction.

Since a part of the throttle body 57 projects from the right side surface 6e of the storage unit 6 to the outside in the vehicle width direction, the space for providing the throttle body 57 can be secured without decreasing the capacity of the storage unit 6.

In this embodiment, the bottom 6c of the storage unit 6 expands downward in a convex shape. Thus, the capacity of the storage unit 6 can be increased without interference between the storage unit 6 and the throttle body 57.

In this embodiment, the left and right suspension portions 3g, 3g projecting toward the front from the lower wall of the crank case 3c of the engine unit 3 are supported by the body frame 2, and the intake system 4 is disposed above the engine unit 3. Thus, the space above the engine unit 3 produced by suspending the lower portion of the engine unit 3 can be effectively utilized as a space for disposing the throttle body 57 and the fuel injection valve 58.

In this embodiment, the first frame member is disposed on the left side in the vehicle width direction, and the third frame member, which has a part extending higher than the first frame member, is disposed on the right side in the vehicle width direction. However, these frame members may be disposed on the opposite side with respect to the left-right direction. Only the requirement in this point is that the throttle body as a part of the intake system accommodating the throttle valve is disposed at a position shifted toward the third frame member and lower than the part of the third frame member extending higher than the first frame member.

### DESCRIPTION OF REFERENCE NUMERALS AND SIGNS

- 1: motorcycle
- 2: body frame
- 3: engine unit
- 3c: crank case
- 3d: cylinder block
- 3e: cylinder head
- 3g: suspension portion (lower portion of crank case)
- 4: intake system
- 6: storage unit
- 6d: bottom (lowermost portion of storage unit)
- 12: shock absorber
- 27: left side pipe (first frame member)
- 28: rail pipe (third frame member)
- 55: intake pipe (intake passage)
- 57: throttle body
- 57a: throttle valve
- 58: fuel injection valve
- A: cylinder axis

- B: portion extending higher than first frame member
- C: center line in vehicle front-rear direction

## Claims

1. A motorcycle (1), comprising:
a body frame (2);
a unit swing type engine (3) supported by the body frame (2) such that the engine (3) can swing upward and downward; and
an intake system (4) connected with the engine (3) and disposed above the engine (3), wherein
the body frame (2) has a head pipe (7), a single main pipe (25) which extends diagonally downward to the rear from the head pipe (7), and first and second frame members (27, 26) extending from the lower end of the main pipe (25) toward the rear of the vehicle, the first frame member (27) passing one side of the vehicle in the vehicle width direction, and the second frame member (26) passing the other side of the vehicle in the vehicle width direction,
a throttle body (57) as a part of the intake system (4), which contains a throttle valve (57a), and a storage unit (6) which is disposed above the engine (3),
the body frame (2) further comprises a third frame member (28) which connects the first frame member (27) and the second frame member (26), **characterized in that**: the third frame member (28) has a portion (B) passing the other side of the vehicle in the vehicle width direction and extending higher than the first frame member (27);
the throttle body (57) is disposed at a position shifted toward the third frame member (28) and lower than the portion (B) of the third frame member (28) extending higher than the first frame member (27);
the storage unit (6) and the throttle body (57) of the intake system (4) are disposed in parallel with each other in the vehicle width direction; and
the lowermost portion (6d) of the storage unit (6) is disposed at a position lower than the third frame member (28) as viewed in a cross section passing the lowermost portion of the storage unit (6) and orthogonal to the center line of the vehicle in the vehicle front-rear direction; and
at least a part of the storage unit (6) overlaps with a part of the throttle body (57) of the intake system (4) as viewed from the side of the vehicle.

2. The motorcycle (1) according to claim 1, wherein a part (28c) of the third frame member (28) overlaps with a part of the throttle body (57) as viewed from above the vehicle.

3. The motorcycle (1) according to claim 1 or claim 2, wherein the size of the first frame member (27) in the vertical direction is larger than that of the third frame member (28).

4. The motorcycle (1) according to any preceding claim, wherein:
a shock absorber (12) is provided to absorb shock produced by the upward and downward movement of the unit swing type engine (3);
the shock absorber (12) is provided only on one side in the vehicle width direction; and
the body frame side end of the shock absorber (12) is connected with the first frame member (27).

5. The motorcycle (1) according to any preceding claim, wherein:
the engine (3) is provided such that the cylinder axis (A) extends substantially in the horizontal direction; and
the intake system (4) is connected with the upper surface of the engine (3).

6. The motorcycle (1) according to any preceding claim, wherein:
the lowermost portion (6d) of the storage unit (6) is located at a position lower than the first frame member (27) as viewed in the cross section.

7. The motorcycle (1) according to any preceding claim, **characterized in that** the intake system (4) includes an intake passage (55) communicating with an intake valve opening of the engine (3), the throttle valve (57a) which opens and closes the intake passage (55), the throttle body (57), and a fuel injection valve (58) disposed between the throttle body (57) and the intake valve opening.

## Patentansprüche

1. Motorrad (1), aufweisend:
einen Karosserierahmen (2);
eine Motoreinheit (3) vom Schwing- Typ, gelagert durch den Karosserierahmen (2) derart, dass die Brennkraftmaschine (3) nach oben oder nach unten schwenken kann; und
ein Einlasssystem (4), verbunden mit der Brennkraftmaschine (3) und oberhalb der Brennkraftmaschine (3) angeordnet,
wobei
der Karosserierahmen (2) ein Kopfrohr (7) hat, ein Einzel-Hauptrohr (25), das sich diagonal nach unten nach hinten von dem Kopfrohr (7) erstreckt, und erste und zweite Rahmenteile (27, 28), die sich von dem unteren Ende des Hauptrohres (25) in Richtung nach hinten des Fahrzeuges erstrecken, wobei das erste Rahmenteil (27) an einer Seite des Fahrzeuges in der Richtung der Breite des Fahrzeuges vorbeigeht, und das zweite Rahmenteil (26) an der anderen Seite des Fahrzeuges in der Richtung der Breite des Fahrzeuges vorbeigeht,
einen Drosselkörper (57), als einen Teil des Einlasssystems (4), das ein Drosselventil (57a) enthält, und eine Speichereinheit (6), die oberhalb der Brennkraftmaschine (3) angeordnet ist,
wobei der Karosserierahmen (2) außerdem aufweist ein drittes Rahmenteil (28), das das erste Rahmenteil (27) und das zweite Rahmenteil (26) verbindet, **dadurch gekennzeichnet, dass** das dritte Rahmenteil (28) einen Abschnitt (B) hat, der an der anderen Seite des Fahrzeuges in der Richtung der Breite des Fahrzeuges vorbeigeht und sich höher als das erste Rahmenteil (27) erstreckt;
der Drosselkörper (57) angeordnet ist an einer Position, verschoben in Richtung zu dem dritten Rahmenteil (28) und niedriger als der Abschnitt (B) des dritten Rahmenteils (28), das sich höher als das erste Rahmenteil (27) erstreckt;
die Speichereinheit (6) und der Drosselkörper (57) des Einlasssystems (4) miteinander parallel in Richtung der Breite des Fahrzeuges angeordnet sind; und
der niedrigste Abschnitt (6d) der Speichereinheit (6) an einer Position niedriger als das dritte Rahmenteil (28) angeordnet ist, wenn im Querschnitt gesehen, der an dem niedrigsten Abschnitt der Speichereinheit (6) vorbei geht und rechtwinklig zu der Mittellinie des Fahrzeuges in der vorn- nach- hinten- Richtung des Fahrzeuges; und
zumindest ein Teil der Speichereinheit (6) mit einem Teil des Drosselkörpers (57) des Einlasssystems (4) überlappt, wenn von der Seite des Fahrzeuges gesehen.

2. Motorrad (1) nach Anspruch 1, wobei ein Teil (28c) des dritten Rahmenteils (28) mit einem Teil des Drosselkörpers (57) überlappt, wenn von oben des Fahrzeuges gesehen.

3. Motorrad (1) nach Anspruch 1 oder Anspruch 2, wobei die Größe des ersten Rahmenteils (27) in der vertikalen Richtung größer als die des dritten Rahmenteils (28) ist.

4. Motorrad (1) nach einem der vorhergehenden Ansprüche, wobei:
ein Stoßdämpfer (12) vorgesehen ist, einen Stoß, erzeugt durch eine Bewegung nach oben oder nach unten der Motoreinheit (3) vom Schwing- Typ zu absorbieren;
wobei der Stoßdämpfer (12) nur auf einer Seite in Richtung der Fahrzeugbreite vorgesehen ist; und das Karosserierahmenseitenende des Stoßdämpfers (12) mit dem ersten Rahmenteil (27) verbunden ist.

5. Motorrad (1) nach einem der vorhergehenden Ansprüche, wobei:
die Brennkraftmaschine (3) derart angeordnet ist, dass sich die Zylinderachse (A) im Wesentlichen in der horizontalen Richtung erstreckt; und
das Einlasssystem (4) mit der oberen Oberfläche der Brennkraftmaschine (3) verbunden ist.

6. Motorrad (1) nach einem der vorhergehenden Ansprüche, wobei:
der niedrigste Abschnitt (6d) der Speichereinheit (6) an einer Position niedriger als das erste Rahmenteil (27) angeordnet ist, wenn im Querschnitt gesehen.

7. Motorrad (1) nach einem der vorhergehenden Ansprüche, **dadurch gekennzeichnet, dass** das Einlasssystem (4) enthält einen Einlasskanal (55), der mit einer Einlassventilöffnung der Brennkraftmaschine (3) verbunden ist, das Drosselventil (57a), dass den Einlasskanal (55) öffnet oder schließt, den Drosselkörper (57) und ein Kraftstoffeinspritzventil (58), angeordnet zwischen dem Drosselkörper (57) und der Einlassventilöffnung.

## Revendications

1. Motocycle (1) comprenant :
un cadre (2) ;
un moteur du type oscillant (3) supporté par le cadre (2) de manière à pouvoir osciller vers le haut et vers le bas ; et
un système d'admission (4) relié au moteur (3) et disposé au-dessus de celui-ci,
étant précisé que le cadre (2) a un tube avant (7), un tube principal unique (25) qui s'étend en diagonale vers le bas et vers l'arrière à partir du tube avant (7), et des premier et deuxième éléments de cadre (27, 26) qui s'étendent à partir de l'extrémité inférieure du tube principal (25) vers l'arrière du véhicule, le premier élément de cadre (27) passant d'un côté du véhicule dans le sens de la largeur du véhicule tandis que le deuxième élément de cadre (26) passe de l'autre côté du véhicule, dans le sens de la largeur du véhicule,
un corps d'étranglement (57) qui fait partie du système d'admission (4) et qui contient un papillon des gaz (57a), et
une unité de stockage (6) qui est disposée au-dessus du moteur (3),
le cadre (2) comprend par ailleurs un troisième élément de cadre (28) qui relie le premier élément de cadre (27) et le deuxième élément de cadre (26),
**caractérisé en ce que** le troisième élément de cadre (28) a une partie (B) qui passe de l'autre côté du véhicule, dans le sens de la largeur du véhicule, et qui s'étend plus haut que le premier élément de cadre (27) ;
le corps d'étranglement (57) est disposé à un endroit décalé vers le troisième élément de cadre (28) et plus bas que la partie (B) du troisième élément de cadre (28) qui s'étend plus haut que le premier élément de cadre (27) ;
l'unité de stockage (6) et le corps d'étranglement (57) du système d'admission (4) sont disposés parallèlement l'un à l'autre, dans le sens de la largeur du véhicule ; et
la partie la plus basse (6d) de l'unité de stockage (6) est disposée à un endroit situé plus bas que le troisième élément de cadre (28), vue en coupe transversale qui passe par la partie la plus basse de l'unité de stockage (6) et qui est orthogonale par rapport à l'axe médian du véhicule, dans le sens avant-arrière du véhicule ; et
une partie au moins de l'unité de stockage (6) recouvre une partie du corps d'étranglement (57) du système d'admission (4), vu du côté du véhicule.

2. Motocycle (1) selon la revendication 1, étant précisé qu'une partie (28c) du troisième élément de cadre (28) recouvre une partie du corps d'étranglement (57), vue du dessus du véhicule.

3. Motocycle (1) selon la revendication 1 ou 2, étant précisé que la taille du premier élément de cadre (27) dans le sens vertical est plus grande que celle du troisième élément de cadre (28).

4. Motocycle (1) selon l'une quelconque des revendications précédentes, étant précisé :
qu'il est prévu un amortisseur (12) pour absorber un choc produit par le mouvement du moteur du type oscillant (3) vers le haut et vers le bas ;
que l'amortisseur (12) n'est prévu que sur un côté, dans le sens de la largeur du véhicule ; et
que l'extrémité de l'amortisseur (12) située côté cadre est reliée au premier élément de cadre (27).

5. Motocycle (1) selon l'une quelconque des revendications précédentes, étant précisé
que le moteur (3) est disposé de telle sorte que l'axe de cylindre (A) s'étend globalement dans le sens horizontal ; et
que le système d'admission (4) est relié à la surface supérieure du moteur (3).

6. Motocycle (1) selon l'une quelconque des revendications précédentes, étant précisé que la partie la plus basse (6d) de l'unité de stockage (6) se trouve à un endroit situé plus bas que le premier élément de cadre (27), vu en coupe transversale.

7. Motocycle (1) selon l'une quelconque des revendications précédentes, **caractérisé en ce que** le système d'admission (4) comprend un passage d'admission (55) qui communique avec une ouverture de soupape d'admission du moteur (3), le papillon des gaz (57a) qui ouvre et ferme le passage d'admission (55), le corps d'étranglement (57), et une soupape d'injection de carburant (58) disposée entre le corps d'étranglement (57) et l'ouverture de soupape d'admission.
